# FASCICULE DE BREVET EUROPEEN

(11) **EP 4 508 404 B1**
(45) Date de publication et mention de la délivrance du brevet: **20.08.2025**
(21) Numéro de dépôt: 23733262.2
(22) Date de dépôt: 13.06.2023
(51) Int. Cl.: G01M 3/16, H04B 3/00

(54) **PROCÉDÉ DE CODAGE DE CONDUCTEURS DE COMMUNICATION D'UN CAPTEUR LINÉAIRE APPARTENANT À UN SYSTÈME**
VERFAHREN ZUR CODIERUNG VON KOMMUNIKATIONSLEITERN EINES LINEAREN SENSORS EINES SYSTEMS
METHOD FOR CODING COMMUNICATION CONDUCTORS OF A LINEAR SENSOR BELONGING TO A SYSTEM

(30) Priorité: 16.06.2022 FR 2205911
(43) Date de publication de la demande: 19.02.2025
(73) Titulaire: TTK, 75008 Paris (FR)
(72) Inventeur: GAUTIER, Olivier, 75006 PARIS (FR); GILLOT, Olivier, 75017 PARIS (FR)
(74) Mandataire: IPAZ
(86) Numéro de dépôt international: PCT/EP2023/065852
(87) Numéro de publication internationale: WO 2023/242217

(56) Documents cités:
- GB-A- 2 337 675

## Description

### Domaine technique

La présente invention concerne un procédé de codage de conducteurs de communication d'un capteur linéaire appartenant à un système. Elle concerne aussi un système pour la mise en œuvre dudit procédé.

### Etat de la technique antérieure

Pour détecter des fuites de liquide, sur de grandes longueurs telles que des oléoducs ou des conduites d'eau ou sur de grandes surfaces telles que des locaux industriels ou des salles informatiques, il est connu d'installer des capteurs linéaires connectés entre en eux en série pour former une ligne de détection.

Dans une telle ligne de détection, chaque capteur comprend une partie allongée qui inclut sur tout ou partie de sa longueur un moyen sensible au(x) liquide(s) à détecter. Les capteurs comprennent aussi dans leur partie allongée un bus de communication, lesquels sont connectés entre eux pour former un bus d'interrogation parcourant toute la longueur de la ligne de détection. L'extrémité de la ligne de détection est connectée avec une centrale.

Une telle ligne de détection, dans une version sensible aux hydrocarbures, est décrite dans le document EP3066443. D'autres modes de détection sont connus, par exemple avec une sensibilité aux liquides conducteurs tels que l'eau comme décrit dans les documents FR2773613 et EP09306176.

Un autre exemple d'antériorité peut être trouvé dans le document GB2337675.

Il reste souhaitable d'améliorer ce type de détecteurs et d'installations en particulier en matière de fiabilité, de coût, de performances, pour leur permettre de couvrir des zones plus importantes, plus variées, de façon plus souple à mettre en place ou à entretenir ou à gérer, ou à remplacer.

Un objectif de l'invention est de pallier en tout ou partie les inconvénients de l'état de la technique, en particulier en améliorant leurs performances sur ces différents points ou les compromis entre ces différentes performances.

### Exposé de l'invention

La présente invention est définie par la revendication indépendante ci-jointe. D'autres modes de réalisation préférés peuvent être trouvés dans les revendications dépendantes. La présent demande divulgue un procédé de codage de conducteurs de communication d'un capteur linéaire appartenant à un système, le système comprenant une centrale (8) et une pluralité de capteurs linéaires (500) comprenant chacun une première extrémité et une deuxième extrémité et qui sont connectés entre eux en série pour former un bus différentiel, lequel est connecté fonctionnellement à ladite centrale par au moins une extrémité dudit bus différentiel, chaque capteur linéaire comprenant au moins :- un premier connecteur (430) à une première extrémité dudit capteur linéaire, le premier connecteur (430) comprenant un module de gestion (210) connecté à un module de communication (410),- un deuxième connecteur (440) à une deuxième extrémité dudit capteur linéaire,-deux conducteurs de communication (416), les deux conducteurs de communication étant connectés au premier connecteur (430) en une première extrémité desdits deux conducteurs de communication, et au deuxième connecteur (440) en une deuxième extrémité desdits deux conducteurs de communication, caractérisé en ce que le procédé comprend les étapes suivantes :- codage d'au moins deux signaux d'information de manière simultanée comme suit au moins un signal d'information étant codé par la centrale (8) par augmentation de tension T sur le premier conducteur de communication, au moins un signal d'information étant codé par la centrale (8) par diminution de tension T sur le deuxième conducteur de communication,- lecture d'une tension par la centrale par mesure de la différence de tension entre les deux conducteurs de communication, et en ce que le système comprend également au moins un accessoire permettant de créer un système modulable.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
**[****Fig. 1****]** illustre un capteur linéaire,
**[****Fig. 2****]** illustre un exemple de mode de réalisation selon l'invention,
**[****Fig. 3****]** décrit un autre exemple de mode de réalisation selon l'invention,
**[****Fig. 4****]** décrit un autre exemple de mode de réalisation selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

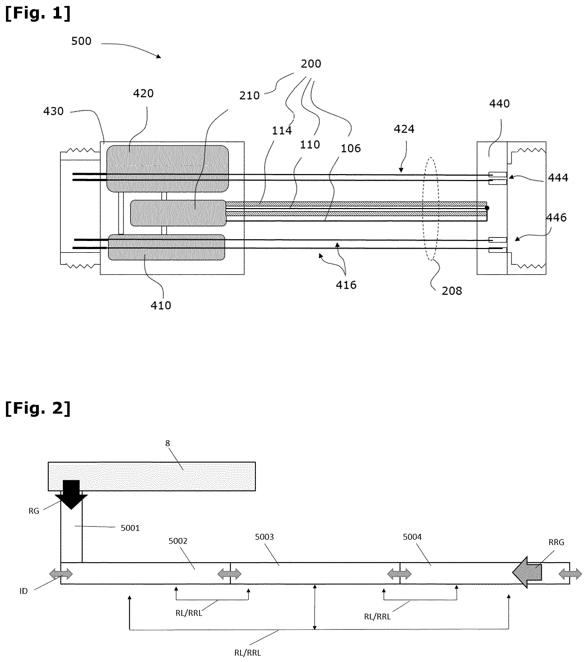

La figure 1 illustre un exemple de constitution d'un capteur linéaire utilisable dans le cadre de l'invention. Cependant, d'autres types de capteurs linéaires montés en série sont utilisables dans le cadre de l'invention, avec tous types de modes de détection, et tous de types de bus de communication et/ou d'alimentation. Des capteurs linéaires différents les uns des autres peuvent aussi être utilisés ensemble dans le cadre de l'invention, dès lors que leurs bus de communication sont compatibles entre eux et avec la centrale.

Dans cet exemple, chaque capteur linéaire 500 comprend un détecteur 200. Ce détecteur 200 comprend un module de gestion 210, qui est connecté à l'extrémité proximale d'un membre de détection 208 allongé sur toute la longueur du capteur linéaire 500. Ce membre de détection 208 forme un faisceau qui comprend deux conducteurs métalliques 106 et 110 et deux conducteurs de détection 114, qui sont électriquement connectés deux à deux. Le module de gestion 210 mesure les propriétés électriques des conducteurs de détection 114 grâce à l'un des conducteurs métalliques 106 et 110, dit fil de retour de mesure. Pour une détection d'un liquide conducteur comme par exemple une détection eau/acide base, la résistivité du membre de détection diminue lors d'un contact avec ledit liquide. Pour une détection d'un liquide non conducteur de type hydrocarbure ou solvant par exemple, la résistivité du membre de détection augmente lors d'un contact avec ledit liquide.

En plus de l'élément détecteur 200, le capteur linéaire 500 comprend un élément de communication qui inclut d'une part deux conducteurs de communication 416 et deux conducteurs d'alimentation 424 courant sur toute la longueur du capteur linéaire 500. Les deux conducteurs de communication ont une communication à double sens. A l'extrémité proximale du capteur linéaire 500, un connecteur 430 renferme le module de gestion 210. Le connecteur 430 comprend également un module de communication 410 et un module d'alimentation 420, qui sont connectés aux conducteurs de communication 416 et d'alimentation 424 et forment avec eux un bus de communication différentiel alimenté.

Chaque capteur linéaire 500 porte à son extrémité distale un connecteur 440. Le connecteur 440 comprend des ports de connexion 444 et 446 qui permettent de connecter l'extrémité distale de ses conducteurs d'alimentation 424 et respectivement de communication 416 à l'extrémité proximale d'un autre capteur linaire du même type.

Les positions des connecteurs 430 et 440 ne sont pas limitatives. Dans certains modes de réalisation, le connecteur 440 est positionné sur l'extrémité proximale du capteur linéaire 500 et le connecteur 430 sur l'extrémité distale du capteur linéaire 500 par exemple.

Au moins deux signaux d'information sont codés par la centrale 8 de manière simultanée sur les deux conducteurs de communication comme suit :
- au moins un signal d'information est codé par la centrale par augmentation de tension T sur le premier conducteur de communication,
- au moins un signal d'information étant codé par la centrale 8 par diminution de tension T sur le deuxième conducteur de communication.

Par exemple, un des signaux d'information est codé en plus cinq volt sur un premier conducteur d'information tandis qu'un autre signal d'information est codé en moins cinq volt sur un deuxième conducteur d'information et ce, de manière simultanée. Les valeurs de tensions ici ne sont en rien limitatives. Elles sont données à titre d'exemple. Les différents signaux d'information sont transmis à travers l'ensemble des capteurs linéaires composant le réseau via les conducteurs de communication de chaque capteur linéaire. Une lecture d'une tension est ensuite réalisée par la centrale en mesurant la différence de tension entre les deux conducteurs de communication.

Les signaux d'information sont transmis sous forme de bits d'information.

En référence à la figure 2, nous allons maintenant décrire un exemple de mode de réalisation.

Le système ou réseau présenté se compose d'une centrale 8 et de quatre capteurs linéaires 5001 à 5004 branchés en série et connectés à la centrale 8 par une des extrémités du capteur linéaire 5001. Le nombre de capteurs linéaires est donné à titre indicatif et n'est par conséquent pas limitatif. La série de capteurs linéaires forme une ligne de détection non bouclée et fermée. Elle est fermée par un bouchon. Chaque capteur linéaire comprend deux conducteurs de communication 416. Les deux conducteurs de communication de chaque capteur linéaire sont agencés pour transmettre différentes requêtes envoyées par la centrale 8. Les deux conducteurs de communication sont également agencés pour transmettre les réponses aux différentes requêtes reçues vers la centrale 8.

Lorsque le système démarre, chaque élément du réseau, c'est-à-dire les capteurs linéaires et le bouchon dans cet exemple, vont automatiquement envoyer une requête locale RL aux éléments se situant en amont et/ou en aval. L'envoi des requêtes locales RL se fait de manière autonome au démarrage. On entend par « autonome », le fait que les requêtes locales soient envoyées sans requête générale de la centrale au préalable. Les différents éléments peuvent envoyées les requêtes locales les uns après les autres ou par tronçon de réseau ou alors tous en même temps par exemple.

En effet, dans un premier temps et dans l'exemple présenté, le capteur linéaire 5001 identifie le capteur linéaire 5002 en aval, le capteur linéaire 5002 identifie le capteur linéaire 5001 en amont et le capteur linéaire 5003 en aval, le capteur linéaire 5003 identifie le capteur linéaire 5002 en amont et le capteur linéaire 5004 en aval et enfin le capteur linéaire 5004 identifie le capteur linéaire 5003 en amont (référence ID sur la figure2).

Dans un deuxième temps, chaque capteur linéaire 5001 à 5004 envoie une requête local RL aux capteurs linéaires qu'ils ont chacun identifié via les deux conducteurs de communication de chaque capteur linéaire. La requête locale est transmise sur chaque conducteur de communication de manière simultanée. Dans l'exemple présenté figure 2, le capteur linéaire 5001 envoie une requête local RL au capteur linéaire 5002, le capteur linéaire 5002 envoie une requête locale RL aux capteurs linéaires 5001 et 5003, le capteur linéaire 5003 envoie une requête locale RL aux capteurs linéaires 5002 et 5004, et enfin le capteur linéaire 5004 envoie une requête locale RL au capteur linéaire 5003.

Les requêtes locales RL sont donc envoyées par les deux modules de communication de chaque capteur linéaire 5001 à 5004 sous forme de signal d'interrogation. Les conducteurs de communication utilisés pour l'envoi des requêtes locales sont les mêmes que ceux utilisés pour l'envoi des requêtes générales RG. Les requêtes locales RL reçues sont traitées par le module de gestion 210 de chaque capteur linéaire 5001 à 5004. L'ensemble des capteurs linéaires 5001 à 5004 traitent la requête locale RL qu'ils ont reçues et y répondent (référence RRL sur la figure 2) en envoyant les réponses via les deux conducteurs de communication. Chaque conducteur de communication envoie les réponses RRL attendues suite à la requête locale RL envoyée. Les différents éléments peuvent répondre aux requêtes locales les uns après les autres ou par tronçon de réseau ou alors tous en même temps par exemple.

Chaque détecteur 200 interne à chaque capteur linéaire comprend un identifiant unique qui permet de l'identifier. L'identifiant unique correspond au numéro de série du détecteur 200 de chaque capteur linéaire par exemple. Lorsqu'un capteur linéaire répond à une requête locale RRL, celui-ci communique son identifiant unique au capteur linéaire qui a envoyé la requête locale RL. Par exemple, le capteur linéaire 5001 envoie en réponse à la requête locale RRL du capteur linéaire 5002 son identifiant unique, le capteur linéaire 5002 envoie son identifiant unique en réponse aux capteurs linéaires 5001 et 5003, le capteur linéaire 5003 envoie son identifiant unique en réponse aux capteurs linéaires 5002 et 5004 et enfin le capteur 5004 envoie son identifiant unique en réponse au capteur linéaire 5003. Les identifiants uniques sont envoyés via les deux modules de communication de chaque capteur linéaire 5001 à 5004.

Dans un mode de réalisation préféré, la centrale 8 envoie une requête générale RG à l'ensemble des capteurs linéaires 5001 à 5004 ainsi qu'au bouchon afin d'obtenir l'ensemble des identifiants uniques des éléments qui composent le réseau ainsi que les identifiants uniques identifiés par les différents éléments du réseau, c'est-à-dire les éléments qui se trouvent en amont/aval des éléments et/ou qui sont connectés aux différents éléments. Cette requête générale RG va permettre à la centrale de reconstituer l'architecture du réseau ou système.

La requête générale RG est transmise à travers le réseau via les deux conducteurs de communication de chaque capteur linéaire dans le sens centrale - bouchon. C'est-à-dire que la requête générale RG est envoyée sur les deux conducteurs de communication de manière simultanée.

La requête générale RG est reçue par chaque module de communication de chaque capteur linéaire 5001 à 5004. La requête générale RG est traitée par le module de gestion 210 de chaque capteur linéaire. La requête générale RG est transmise sous forme de signal d'interrogation par la centrale 8 aux différents capteurs linéaires via les conducteurs de communication de chaque capteur linéaire. Le nombre de requêtes générales n'est pas limité. Le premier conducteur de communication fonctionne de manière identique au deuxième conducteur de communication et vice versa. La requête générale RG a été envoyée sur chacun des deux conducteurs de communication et par conséquent chaque conducteur de communication permet le renvoi des réponses à la requête générale RRG reçues vers la centrale.

Dans un premier temps, la centrale 8 envoie une requête générale RG à l'ensemble des capteurs linéaires 5001 à 5004 ainsi qu'au bouchon. En réponse à la requête générale RG envoyée par la centrale 8, chaque élément du réseau envoie son identifiant unique ainsi que l'identifiant unique des éléments se trouvant en amont/aval de celui-ci obtenus grâce aux différentes requêtes locales RL envoyées lors du démarrage su système.

Par conséquent, chaque capteur linéaire transmet à la centrale 8 son identifiant unique (réponse à la première requête générale RRG) ainsi que les identifiants uniques des capteurs linéaires qu'ils ont identifiés (réponse à la deuxième requête générale RRG). Par exemple, dans le cas présenté, pour répondre à la requête générale RRG, le capteur linéaire 5001 envoie à la centrale son identifiant unique ainsi que celui du capteur linéaire 5002, le capteur linéaire 5002 envoie à la centrale 8 son identifiant unique et les identifiants uniques des capteurs linéaires 5001 et 5003, le capteur linéaire 5003 envoie à la centrale son identifiant unique ainsi que les identifiants uniques des capteurs linéaires 5002 et 5004, et enfin le capteur linéaire 5004 envoie à la centrale 8 son identifiant unique ainsi que celui du capteur linéaire 5003. Les réponses à la requête générale RRG sont transmises sous forme de signal de réponse à la centrale 8.

Dans ce mode de réalisation préféré, la requête générale RG envoyée permet également de faire remonter à la centrale 8 des données spécifiques **propres aux** éléments du réseau. Dans ce cas, chaque élément du réseau envoie une nouvelle requête locale aux éléments en amont et/ou en aval. La réponse à la requête locale RRL de chaque capteur linéaire ou accessoire comme le bouchon comprend alors les données spécifiques demandées par la requête générale RG qui sont propres aux différents éléments du réseau. Les réponses aux différentes requêtes locales peuvent comprendre une ou plusieurs données spécifiques. Les données spécifiques sont par exemple :
- une date de mise en service du capteur linéaire,
- le type de capteur linéaire,
- une longueur du capteur linéaire,
- une résistance de boucle interne au capteur linéaire,
- un niveau de pollution,
- un état d'alarme,
- un niveau d'alimentation.

Les données spécifiques ne sont pas limitées à cette liste. Les données spécifiques sont dans d'autres mode de réalisation des données historiques, ou de sensibilité par exemple.

Chaque capteur linéaire comprend une date de mise en service. Cette donnée spécifique est stockée dans le module de gestion 210 dudit capteur linéaire par exemple. Il en est de même pour le type de capteur linéaire et la longueur de celui-ci. Ces données spécifiques sont donc transmises à la centrale 8 lors des étapes de réponses à une requête locale RRL ou lors d'une réponse à une requête générale RRG via les deux conducteurs de communication de chaque capteur linéaire.

On entend par « boucle interne au capteur linéaire » dans l'expression résistance de boucle interne au capteur linéaire, une boucle formée par un des conducteurs métalliques et un fil de retour de mesure dans un capteur linéaire (références 106 et 110 sur figure 1). La résistance d'une boucle interne correspond donc à l'état dans laquelle celle-ci se trouve. Dans le cas où, par exemple, le conducteur métallique ou le fil de retour est coupé, endommagé, ou que pour toute autre raison la boucle interne n'est plus fonctionnelle, un état d'alarme du capteur linéaire correspondant à une alarme de discontinuité est envoyé à la centrale 8 pour prévenir l'utilisateur.

Les conducteurs de détections 114 (figure 2) comprennent une résistance (non représentée sur les figures) qui permet de définir si une rupture du membre de détection 208 est apparue. On entend par « un niveau de pollution », le niveau de pollution de ladite résistance des conducteurs de détection 114. En effet, au cours de l'utilisation d'un capteur linéaire, de la poussière peut se déposer sur la résistance, par exemple, ou la résistance peut se dégrader suite aux conditions environnementales dans lesquelles elle se trouve. Dans ce cas, un état d'alerte du capteur linéaire correspondant à une alerte de nettoyage est envoyé à la centrale 8 pour prévenir l'utilisateur par exemple.

Un état d'alarme est envoyé si une des conditions précédemment décrites se produit via les conducteurs de communication. L'état d'alarme est également activé en fonction d'un niveau de sensibilité du réseau. En effet, ce niveau de sensibilité est défini en fonction des données spécifiques de pollution et/ou de résistance des boucles internes envoyées à la centrale. Pour cela, un seuil de sensibilité est défini au préalable pour chaque capteur linéaire ou pour le réseau en fonction du besoin. Par exemple, le seuil de sensibilité est réglé entre un et cinq s'il s'agit d'un seuil de sensibilité individuel, soit propre à chaque capteur linéaire ou à zéro s'il s'agit d'un seuil de sensibilité globale du réseau.

Le niveau d'alimentation d'un capteur linéaire est défini par le module d'alimentation 420. Les deux conducteurs d'alimentation 424 sont chargés de transmettre l'alimentation à travers le réseau. Cependant, la portée de l'alimentation est limitée à une certaine distance de capteurs linéaires, c'est à dire une certaine longueur de câbles. Par conséquent, le niveau d'alimentation de chaque capteur linéaire est transmis lorsqu'une requête générale RG est envoyée par la centrale et/ou lorsqu'une requête locale RL est envoyée pas l'un des capteurs linéaires.

Dans le cas où la centrale 8 identifie un capteur linéaire possédant un niveau d'alimentation trop faible, c'est-à-dire en dessous d'un seuil prédéterminé un état d'alerte est envoyé par le module de gestion 210 du capteur linéaire en question à la centrale 8. La centrale 8 envoie alors un message à l'utilisateur pour qu'il puisse intervenir sur le réseau. Par exemple, si l'alimentation du réseau est égale à douze volts, le seuil prédéterminé peut se trouver à environ dix volts - dix volts et demi. La centrale peut aussi signaler à l'utilisateur qu'il y a trop d'éléments sur la boucle. L'utilisateur peut alors intervenir et supprimer des éléments ou ajouter une alimentation externe si cela est possible.

Dans le cas où une rupture ou une défaillance se produit sur l'un des capteurs linéaires, celui-ci se met en état d'alarme. Le module de gestion dudit capteur linéaire en état d'alarme transmet alors à la centrale cette donnée spécifique en réponse à la requête générale RRG ou sur requête locale RRL d'un capteur linéaire.

Quand toutes les réponses aux requêtes locales RRL ont été envoyées et traitées par les capteurs linéaires, chaque capteur linéaire 5001 à 5004 répond à la requête générale RRG envoyée par la centrale 8 (référencé RRG sur la figure 2) via les deux conducteurs de communication de chaque capteur linéaire dans le sens bouchon-centrale, les conducteurs de communication étant les mêmes que ceux qui transmettent les signaux d'interrogation.

Dans le mode de réalisation préféré présenté ici, une seule requête générale RG est envoyée par la centrale 8 afin de recevoir les identifiants uniques de chaque élément du réseau ainsi que des données spécifiques permettant à la centrale 8 de connaitre par exemple le type d'élément qui forme le réseau, ou l'état dans lequel il se trouve.

La communication via les conducteurs de communication de chaque capteur linéaire permet à la centrale 8 en fonction des données spécifiques reçues ainsi que des identifiants uniques des éléments du réseau, de déterminer directement quel capteur linéaire est en état d'alarme et où il se situe dans le réseau par exemple.

Les deux conducteurs de communication de chaque capteur permettent alors la communication entre la centrale et l'ensemble des éléments du réseau, cette communication étant à double sens (centrale bouchon / bouchon centrale) sur les deux conducteurs de communication de chaque capteur linéaire. Le double sens des conducteurs de communication fonctionne de chacune de ses extrémités, c'est-à-dire par exemple, de l'extrémité une vers l'extrémité deux et vice versa et/ ou de l'extrémité deux vers l'extrémité une et vice versa.

Dans un second mode de réalisation, la centrale 8 envoie deux requêtes générales RG distinctes afin de faire remonter d'une part les identifiants uniques de chaque élément et d'autre part les données spécifiques propre à chaque élément.

Dans un premier temps, lors du démarrage du réseau, la centrale 8 envoie une première requête générale RG à l'ensemble des capteurs linéaires 5001 à 5004 afin de d'obtenir l'ensemble des identifiants uniques compris dans chaque élément qui composent le réseau ainsi que les identifiants uniques identifiés par les différents éléments du réseau, c'est-à-dire les éléments qui se trouvent en amont/aval des éléments et/ou qui sont connectés aux différents éléments. Suite à cette première requête générale RG, chaque élément du réseau, c'est-à-dire les capteurs linéaires et le bouchon dans cet exemple, vont envoyer une requête locale RL aux éléments se situant en amont et/ou en aval. Dans ce mode de réalisation, l'envoi des requêtes locales par les éléments du réseau ne se fait pas de manière autonome mais sur demande. Sur le même principe que présenté dans le mode de réalisation préféré, l'ensemble des éléments du réseau répond aux différentes requêtes locales RL envoyée. Une fois l'ensemble des requêtes locales RL traitées, les éléments du réseau répondent à la première requête générale RG toujours selon le même principe que celui présenté dans le mode de réalisation préféré.

Dans un deuxième temps et si besoin, la centrale envoie une deuxième requête générale RG afin d'obtenir les différentes données spécifiques propres à chaque élément du réseau. Les données spécifiques sont les mêmes que celles présentées dans le mode de réalisation préféré. L'envoi de la deuxième requête fonctionne sur le même principe que l'envoi d'une seule requête générale RG comme présenté dans le mode de réalisation préféré.

La centrale 8 reçoit alors l'ensemble des réponses des requêtes générales RRG (la première ainsi que la deuxième), et les traite. Les réponses aux requêtes générales sont donc adaptées au type de requête générale envoyées.

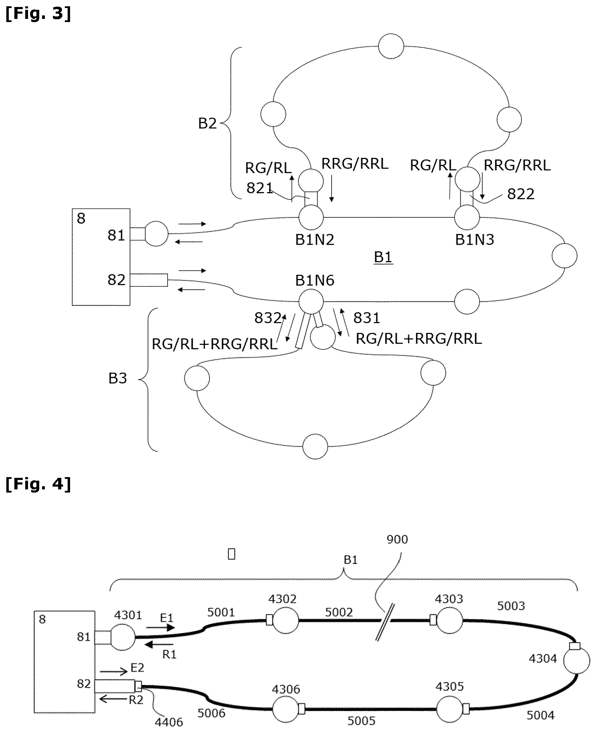

En Fig.3 est illustré un autre exemple de mode de réalisation de l'invention. Dans cet exemple, les différentes requêtes correspondent à des signaux d'interrogation. Les différentes réponses aux différentes requêtes correspondent à des signaux de réponse.

Le réseau se compose d'une centrale 8 comprenant deux connecteurs 81 et 82 connectés à une série de capteurs linéaires formant la boucle B1 via les connecteurs des capteurs linéaires situés aux extrémités de ladite série. La boucle B1 comprend des dérivations B1N2, B1N3 et B1N6, qui reçoivent deux séries de capteurs linéaires formant les boucles secondaires B2 et B3.

Ces dérivations B1N2, B1N3 et B1N6 sont formées par un module électronique de dérivation, qui est agencé pour recevoir dans au moins une de ses sorties, le connecteur d'un ou plusieurs capteurs linéaires, potentiellement du même type mais pas obligatoirement.

Dans cet exemple, chacune de ces dérivations sont situées au niveau de l'un des connecteurs d'un capteur linéaire, par exemple dans le boîtier qui contient le module de communication 410 (voir figure 1). Le connecteur 4302 contient ainsi une dérivation B1N2, le connecteur 4303 contient une dérivation B1N3, et le connecteur 4306 contient une dérivation B1N6.

Au sein d'un capteur linéaire, chacune des dérivations est fonctionnellement connectée au module de communication 410 et par conséquent au deux conducteurs de communication, qui lui transmette les signaux d'interrogation E1, E2 qu'elle reçoit via les conducteurs de communication, en plus de les transmettre au capteur linéaire adjacent. La dérivation est agencée pour transmettre le signal d'interrogation vers un capteur linéaire dérivé par l'intermédiaire d'une boite de dérivation.

Ainsi, le bus différentiel (dite boucle de rang un ou boucle B1) porte une dérivation dite simple B1N2, muni d'une boite de dérivation 821 sur laquelle est connectée l'une des extrémités d'un second bus différentiel (dite boucle de rang deux ou boucle B2). La boucle primaire B1 porte également une deuxième dérivation simple B1N3, muni d'une deuxième boite de dérivation 822 sur laquelle est connectée la deuxième extrémité de la boucle secondaire B2.

Chaque dérivation et/ou accessoire du réseau envoie un signal de réponse comprenant des données propres à ladite dérivation et/ou accessoire en même temps que celle-ci et/ou celui-ci transfère les signaux de réponses du second bus différentiel vers la centrale.

Par cette boite de dérivation 821, la dérivation B1N2 répercute sous la forme de premiers signaux d'interrogation E21 dans la boucle B2, les premiers signaux d'interrogation E1 reçus dans le connecteur 4302 envoyés par le port d'interrogation 81 à travers les conducteurs de communication de la boucle B1. La dérivation B1N2 est aussi agencée pour recevoir par sa boite de dérivation 821 les signaux de réponse R21 envoyés par les conducteurs de communication de la boucle B2 en réponse aux signaux d'interrogation E21, et les répercuter dans la boucle primaire B1 sous la forme de signaux de réponse R1. Les signaux de réponse R21 sont transmis au port d'interrogation 81 de la centrale qui a émis les signaux d'interrogation via les conducteurs de communication de la boucle B1. On comprend ici que les conducteurs de communication des capteurs linéaires fonctionnent de la même manière que celle présentée dans le mode de réalisation de la figure 2.

Par cette boite de dérivation 822, la dérivation B1N3 répercute sous la forme de premiers signaux d'interrogation E22 dans la boucle B2, les premiers signaux d'interrogation E2 reçus dans le connecteur 4303 envoyés par le port d'interrogation 82 via les conducteurs de communication de la boucle B1. La dérivation B1N3 est aussi agencée pour recevoir par sa boite de dérivation 822 les signaux de réponse R22 envoyés par les conducteurs de communication de la boucle B2 en réponse aux signaux d'interrogation E22, et les répercuter dans la boucle primaire B1 sous la forme de signaux de réponse R2. Les signaux de réponse R22 sont transmis au port d'interrogation 82 de la centrale qui a émis les signaux d'interrogation via les connecteurs de communication de la boucle B1.

Cette boucle primaire B1 porte encore une troisième dérivation B1N6, dit double. Cette dernière fonctionne de la même façon que les dérivations simples, à la différence qu'elle réunit et gère à la fois une première boite de dérivation 831 et une deuxième boite de dérivation 832 sur lesquelles sont connectées les deux extrémités d'une deuxième boucle secondaire B3 (elle-même aussi de rang deux). Chacune de ces boites de dérivation 831, 832 lui transmette des premiers et deuxièmes signaux d'interrogation E31 et E32, et en reçoit des premiers et deuxièmes signaux de réponse R31 et R32.

Comme on le comprend, les premières et deuxièmes boites de dérivation de ladite dérivation B1N6 de la boucle B1 sont vues par les boucles B2, B3 de façon similaire aux ports d'interrogation 81, 82 de la centrale 8.

La dérivation B1N6 est donc agencée pour recevoir par sa boite de dérivation 831 les signaux de réponse R31 envoyés par les conducteurs de communication de la boucle B3 en réponse aux signaux d'interrogation E31, et les répercuter dans la boucle primaire B1 sous la forme de signaux de réponse R1 via les conducteurs de communication de la boucle B1. Les signaux de réponse R31 sont transmis au port d'interrogation 81 de la centrale qui a émis les signaux d'interrogation.

La dérivation B1N6 est également agencée pour recevoir par sa boite de dérivation 822 les signaux de réponse R32 envoyés par les capteurs linéaires de la boucle B3 en réponse aux signaux d'interrogation E32 via les conducteurs de communication de la boucle B3, et les répercuter dans la boucle primaire B1 sous la forme de signaux de réponse R1 via les conducteurs de communication de la boucle B1. Les signaux de réponse R32 sont transmis au port d'interrogation 82 de la centrale qui a émis les signaux d'interrogation.

On voit qu'il est ainsi possible de réaliser de nombreuses topologies, combinant des boucles de différents rangs, de façon très souple, aussi bien vis-à-vis des zones à surveiller que du point de vue des modifications d'installation en cours de vie. Ces avantages sont obtenus tout en bénéficiant de la redondance et de la localisation de défaillance que permet le fonctionnement individuel de chaque boucle, dont toutes les informations remontent finalement à la centrale 8 grâce aux conducteurs de communication à double sens de chaque capteur linéaire.

En Fig.4 est illustré un autre exemple de mode de réalisation de l'invention, dans lequel un ensemble de capteurs 5001 à 5006 (ici six à titre d'exemple mais ce nombre n'est pas limité) sont connectés entre eux en série, pour former une boucle, ici appelée boucle simple qui est raccordée par ses deux extrémités 4301 et 4406 à la centrale 8. Cette boucle correspond à une boucle de niveau un. Cette boucle forme également un bus d'interrogation différentiel.

Cette boucle utilise par exemple des capteurs linéaires tels que celui de la Fig.1, sans que cela ne soit en rien limitatif des types de capteurs linéaires pouvant être mis en œuvre.

La centrale 8 porte un premier port d'interrogation ou port de communication 81 et un deuxième port d'interrogation ou port de communication 82. Sur le premier port d'interrogation 81 est connecté le premier capteur linéaire 5001 du bus d'interrogation différentiel, au moyen de son connecteur proximal 4301. Le dernier capteur linéaire 5006 est connecté par son connecteur distal 4406 au deuxième port d'interrogation 82. Chaque capteur linéaire composant le bus d'interrogation différentiel comprend deux conducteurs de communication. La communication sur les deux conducteurs de communication est à double sens. Les conducteurs de communication présentés ici fonctionne de la même manière que celle présenté dans le mode de réalisation de la figure 2 ou 3.

Le premier port d'interrogation 81 de la centrale 8 interroge tous les capteurs linéaires de la boucle B1 en émettant un premier signal d'interrogation E1 à travers chaque conducteur de communication de chaque capteur linéaire. Il reçoit une première série de signaux de réponses R1 renvoyés par l'ensemble des capteurs linéaires, en réponse à ce premier signal d'interrogation E1 via chaque conducteur de communication de chaque capteur linéaire. Une fois que l'ensemble des signaux de réponse sont reçus par le port d'interrogation 81, le deuxième port d'interrogation 82 de la centrale 8 interroge lui aussi tous les capteurs de la boucle B1 en émettant un deuxième signal d'interrogation E2 via chaque conducteur de communication de chaque capteur linéaire. Il reçoit une deuxième série de signaux de réponse R2 renvoyés par l'ensemble des capteurs linéaires de la boucle B1, en réponse à ce signal d'interrogation E2 via chaque conducteur de communication de chaque capteur linéaire.

Les signaux d'interrogation E1, E2 et signaux de réponse R1, R2 sont transmis par chaque conducteur de communication de chaque capteur linéaire de la boucle B1 de façon indépendante l'une de l'autre mais de façon préféré, de manière simultanée. Chaque conducteur de communication de chaque capteur est parcouru par deux interrogations/réponses : d'une part E1-R1, et d'autre part E2-R2, il y a donc une communication à double sens.

La centrale 8 compare alors les signaux de réponse des deux extrémités. Dans le cas où aucune rupture ou défaillance n'est présente sur le bus d'interrogation différentiel, la centrale ne trouve aucune différence lors de la comparaison des signaux de réponse.

Dans le cas où une rupture 900 ou une défaillance se produit sur l'un des capteurs linéaires (ici 5002) du bus d'interrogation différentiel, le capteur linéaire en question 5002 est capable de répondre soit à l'amont, soit à l'aval, le module de gestion de celui-ci restant alimenté par l'amont ou l'aval de la boucle (cas d'une seule rupture). Le premier port d'interrogation 81 reçoit donc un signal de réponse des capteurs linéaires situés en amont, ici le signal de réponse du capteur linéaire 5001 et, si le capteur linéaire 5002 est alimenté par l'amont selon le sens de l'interrogation E1, le signal de réponse du capteur linéaire 5002. Les suivants ne reçoivent pas le premier signal d'interrogation E1, et ne peuvent pas y répondre. Une fois que l'ensemble des signaux de réponse sont reçus par le port d'interrogation 81 via les conducteurs de communication de chaque capteur linéaire, le deuxième port d'interrogation 82 interroge depuis l'autre extrémité de la boucle B1 les capteurs linéaires du bus d'interrogation différentiel via les conducteurs de communication de chaque capteur linéaire, et reçoit les signaux de réponse des capteurs linéaires qui sont en amont de la rupture/défaillance 900 par rapport au sens du signal d'interrogation E2. Il reçoit donc des signaux de réponse de la part de tous les autres capteurs linéaires suivant 5006, 5005, 5004, et 5003 de cette même boucle B1. Et si le capteur linéaire 5002 est alimenté par l'amont selon le sens d'interrogation E2, le signal de réponse du capteur linéaire 5002. Le bus d'alimentation est configuré pour que chaque module 4301 à 4306 soit alimenté aussi bien par l'amont que par l'aval.

Ainsi, la centrale 8 qui interroge le bus d'interrogation différentiel qu'elle voit en aval reçoit des signaux de réponse de tous les capteurs linéaires encore en état de fonctionnement via les deux conducteurs de communication.

En outre, le bus d'interrogation double E1-R1 (flèches pleines) et E2-R2 (flèches évidées) comprenant les deux conducteurs de communication de chaque capteur est organisé pour que la centrale 8 puisse identifier le capteur linéaire à l'origine de chaque réponse. Par exemple, quel que soit le signal d'interrogation E1 ou E2 que la centrale reçoit, les modules de communication des capteurs linéaires 5001 à 5006 sont agencés pour émettre leurs signaux de réponse avec au moins une donnée d'identification, qui permet à la centrale 8 d'identifier le capteur à l'origine de chaque réponse.

Dans le cas d'une rupture ou défaillance, par exemple déduite par la centrale 8 du fait qu'elle ne reçoit pas assez de signaux de réponse ou qu'elle n'en reçoit qu'un seul de chaque capteur linéaire au lieu de deux via les conducteurs de communication, la centrale 8 va identifier quels sont les signaux de réponse qui arrivent par chacun de ses ports d'interrogation 81 et 82. Dans l'exemple de la rupture 900 de la Fig.4, le premier port d'interrogation 81 reçoit le signal de réponse du premier capteur linéaire 5001, si le capteur linéaire 5002 est alimenté par l'amont selon le sens de l'interrogation E1, le signal de réponse du capteur linéaire 5002. Le deuxième port d'interrogation 82 reçoit les signaux de réponse des capteurs linéaires 5003 à 5006 et si le capteur linéaire 5002 est alimenté par l'amont selon le sens de l'interrogation E2, le signal de réponse du capteur linéaire 5002. La centrale 8 compare les signaux de réponse reçus par chaque port d'interrogation de la centrale et en déduit que le capteur linéaire défaillant est le capteur linéaire situé entre le dernier capteur linéaire du premier bus E1-R1 et le dernier capteur linéaire du deuxième bus E2-R2, et donc qu'il s'agit du capteur linéaire 5002. En cas de ruptures, la centrale 8 détermine quelle portion de la boucle B1 ne répond pas sur le même principe.

Ici il faut alors comprendre que si l'alimentation d'un capteur linéaire est coupée à cause d'une défaillance ou rupture, la communication dans le bus différentiel est coupée. C'est-à-dire que la communication à double sens des conducteurs de communication « s'arrête » au niveau de la défaillance ou rupture. Un des avantages de l'invention est que la communication à double sens est appliquée à chaque extrémité du bus différentiel permettant de définir où se situe la défaillance ou rupture.

Typiquement, chacun des moyens du dispositif selon l'invention précédemment décrits peuvent comprendre au moins un ordinateur, une unité centrale ou de calcul, un circuit électronique analogique (de préférence), un circuit électronique numérique (de préférence), et/ou un microprocesseur (de préférence), et/ou des moyens logiciels.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé de codage de conducteurs de communication d'un capteur linéaire appartenant à un système, le système comprenant une centrale (8) et une pluralité de capteurs linéaires (500) comprenant chacun une première extrémité et une deuxième extrémité et qui sont connectés entre eux en série pour former un bus différentiel, lequel est connecté fonctionnellement à ladite centrale par au moins une extrémité dudit bus différentiel, chaque capteur linéaire comprenant au moins :
- un premier connecteur (430) à une première extrémité dudit capteur linéaire, le premier connecteur (430) comprenant un module de gestion (210) connecté à un module de communication (410),
- un deuxième connecteur (440) à une deuxième extrémité dudit capteur linéaire,
- deux conducteurs de communication (416), les deux conducteurs de communication étant connectés au premier connecteur (430) en une première extrémité desdits deux conducteurs de communication, et au deuxième connecteur (440) en une deuxième extrémité desdits deux conducteurs de communication, le procédé comprend les étapes suivantes :
- codage d'au moins deux signaux d'information de manière simultanée comme suit au moins un signal d'information étant codé par la centrale (8) par augmentation de tension T sur le premier conducteur de communication,
au moins un signal d'information étant codé par la centrale (8) par diminution de tension T sur le deuxième conducteur de communication,
- lecture d'une tension par la centrale par mesure de la différence de tension entre les deux conducteurs de communication,
et en ce que le système comprend également au moins un accessoire permettant de créer un système modulable.

2. Procédé selon la revendication 1, **caractérisé en ce que** le système comprend également au moins un accessoire correspondant à une dérivation, l' accessoire comprenant au moins une sortie.

3. Procédé selon la revendication 1 ou 2, **caractérisé en ce que** le système comprend également au moins un accessoire correspondant à un bouchon.

4. Procédé selon la revendication 1 ou 2 ou 3, **caractérisé en ce que** le système comprend également au moins un accessoire correspondant à un câble neutre.

5. Procédé selon l'une quelconque des revendications précédentes, **caractérisé en ce que** le signal d'information est envoyé par la centrale sous forme de bits d'information.

6. Procédé selon les revendications 2 à 5, caractérisé en ce la centrale est agencée pour envoyer au moins une requête générale au bus différentiel et recevoir au moins une réponse de la pluralité de capteurs linéaire et de l'au moins un accessoire à ladite requête générale, le procédé comprenant également les étapes suivantes :
- communication de l'au moins une requête générale (RG) envoyée par la centrale à travers la pluralité de capteurs linéaires (5001 à 5004) et/ou l'au moins un accessoire via les deux conducteurs de communication,
- communication de l'au moins une réponse à la requête générale (RRG) envoyée par ladite pluralité de capteurs linéaires (5001 à 5004) et/ou par l'au moins un accessoire via les deux conducteurs de communication.

7. Procédé selon la revendication 2 et selon l'une quelconque des revendications 3 à 6, **caractérisé en ce que** chaque capteur linéaire et/ou chaque accessoire est agencé pour envoyer au moins une requête locale et recevoir de chaque capteur linéaire et/ou accessoire au moins une réponse à l'au moins une requête locale, le procédé comprenant en outre les étapes suivantes :
- communication via les deux conducteurs de communication de l'au moins une requête locale (RL) à au moins un capteur linéaire identifié par ledit capteur linéaire (5001 à 5004) et/ou par l'au moins un accessoire, l'au moins un capteur linéaire étant considéré comme identifié si l'un de ses connecteurs (430 ou 440) est connecté à un des connecteurs (430 ou 440) dudit capteur linéaire et/ou à l'au moins une sortie de l'au moins un accessoire,
- communication via les deux conducteurs de communication d'au moins une réponse à l'au moins une requête locale (RRL) du capteur linéaire identifié par ledit capteur linéaire (5001 à 5004) et/ou l'accessoire.

8. Procédé selon la revendication 2 et selon l'une quelconque des revendications 3 à 7, **caractérisé en ce que** chaque capteur linéaire (5001 à 5004) et/ou accessoire est **caractérisé par** un identifiant unique.

9. Procédé selon la revendication 8, **caractérisé en ce que** l'au moins une réponse à l'au moins une requête générale envoyée par le capteur linéaire comprend l'identifiant unique de l'au moins un capteur linéaire identifié par ledit capteur linéaire ainsi que l'identifiant unique dudit capteur linéaire (5001 à 5004) , et/ou, l'au moins une réponse à l'au moins une requête générale envoyée par l'accessoire comprend l'identifiant unique de l'au moins un capteur linéaire identifié par ledit accessoire ainsi que l'identifiant unique dudit accessoire.

10. Procédé selon la revendication 7 et selon l'une quelconque des revendications 8 à 9, **caractérisé en ce que** l'au moins une réponse à la requête locale (RRL) est composée de l'identifiant unique de l'au moins un capteur linéaire identifié par ledit capteur linéaire (5001 à 5004) et/ou l'accessoire.

11. Procédé selon la revendication 7 et selon l'une quelconque des revendications 8 à 10, **caractérisé en ce que** l'au moins une réponse à la requête locale (RRL) et l'au moins une réponse à la requête générale (RRG) comprennent également des données spécifiques propres à chaque capteur linéaire (5001 à 5004) et/ou accessoire.

12. Procédé selon l'une quelconques des revendications précédentes, **caractérisé en ce que** la communication sur les conducteurs de communication est à double sens.

13. Système pour la mise en œuvre du procédé selon les revendications précédentes 2 à 12, le système comprenant une centrale (8) et une pluralité de capteurs linéaires (5001 à 5004) comprenant chacun une première extrémité (430) et une deuxième extrémité (440) et qui sont connectés entre eux pour former une ligne de détection, laquelle est connectée à ladite centrale (8) par au moins une extrémité de ladite ligne de détection, le système comprenant également au moins un accessoire.

14. Produit programme d'ordinateur comprenant des instructions qui, lorsque le programme est exécuté par un ordinateur, conduisent celui-ci à mettre en œuvre les étapes du procédé selon l'une quelconque des revendications 1 à 12.

## Patentansprüche

1. Verfahren zum Codieren von Kommunikationsleitern eines linearen Sensors, der zu einem System gehört, das System umfassend eine Zentraleinheit (8) und eine Vielzahl von linearen Sensoren (500), umfassend jeweils ein erstes Ende und ein zweites Ende und die zum Ausbilden eines Differenzialbusses in Reihe miteinander verbunden sind, der über mindestens ein Ende des Differenzialbusses mit der Zentraleinheit wirkverbunden ist, jeder lineare Sensor umfassend mindestens:
- einen ersten Verbinder (430) an einem ersten Ende des linearen Sensors, der erste Verbinder (430) umfassend ein Verwaltungsmodul (210), das mit einem Kommunikationsmodul (410) verbunden ist,
- einen zweiten Verbinder (440) an einem zweiten Ende des linearen Sensors,
- zwei Kommunikationsleiter (416), wobei die zwei Kommunikationsleiter an einem ersten Ende der zwei Kommunikationsleiter mit dem ersten Verbinder (430) und an einem zweiten Ende der zwei Kommunikationsleiter mit dem zweiten Verbinder (440) verbunden sind,
wobei das Verfahren die folgenden Schritte umfasst:
- Codieren von mindestens zwei Informationssignalen gleichzeitig wie folgt:
mindestens ein Informationssignal wird durch die Zentraleinheit (8) durch eine Erhöhung von Spannung T auf dem ersten Kommunikationsleiter codiert,
mindestens ein Informationssignal wird durch die Zentraleinheit (8) durch eine Reduzierung der Spannung T auf dem zweiten Kommunikationsleiter codiert,
- Lesen einer Spannung durch die Zentraleinheit durch Messen der Spannungsdifferenz zwischen den zwei Kommunikationsleitern,
und dass das System ferner mindestens ein Zubehörteil umfasst, das es ermöglicht, ein modulares System zu schaffen.

2. Verfahren nach Anspruch 1, **dadurch gekennzeichnet, dass** das System ferner mindestens ein Zubehörteil umfasst, das einer Ableitung entspricht, das Zubehörteil umfassend mindestens einen Ausgang.

3. Verfahren nach Anspruch 1 oder 2, **dadurch gekennzeichnet, dass** das System ferner mindestens ein Zubehörteil umfasst, das einem Endstecker entspricht.

4. Verfahren nach Anspruch 1 oder 2 oder 3, **dadurch gekennzeichnet, dass** das System ferner mindestens ein Zubehörteil umfasst, das einem neutralen Kabel entspricht.

5. Verfahren nach einem der vorstehenden Ansprüche, **dadurch gekennzeichnet, dass** das Informationssignal durch die Zentraleinheit in Form von Informationsbits gesendet wird.

6. Verfahren nach den Ansprüchen 2 bis 5, **dadurch gekennzeichnet, dass** die Zentraleinheit zum Senden mindestens einer allgemeinen Anfrage an den Differenzialbus und Empfangen einer Antwort von der Vielzahl von linearen Sensoren und von dem mindestens einen Zubehörteil auf die allgemeine Anfrage eingerichtet ist, das Verfahren ferner umfassend die folgenden Schritte:
- Kommunizieren der mindestens einen allgemeinen Anfrage (RG), die durch die Zentraleinheit mittels der Vielzahl von linearen Sensoren (5001 bis 5004) und/oder das mindestens eine Zubehörteil über die zwei Kommunikationsleitungen gesendet wird,
- Kommunizieren der mindestens einen Antwort auf die allgemeine Anfrage (RRG), die durch die Vielzahl von linearen Sensoren (5001 bis 5004) und/oder durch das mindestens eine Zubehörteil über die zwei Kommunikationsleiter gesendet wird.

7. Verfahren nach Anspruch 2 und nach einem der Ansprüche 3 bis 6, **dadurch gekennzeichnet, dass** jeder lineare Sensor und/oder jedes Zubehörteil zum Senden mindestens einer lokalen Anfrage und Empfangen von jedem linearen Sensor und/oder Zubehörteil mindestens einer Antwort auf die mindestens eine lokale Anfrage eingerichtet ist, das Verfahren ferner umfassend die folgenden Schritte:
- Kommunizieren über die zwei Kommunikationsleiter der mindestens einen lokalen Anfrage (RL) an mindestens einen linearen Sensor, der durch den linearen Sensor (5001 bis 5004) und/oder durch das mindestens eine Zubehörteil identifiziert wird, wobei der mindestens eine lineare Sensor als identifiziert gilt, wenn einer seiner Verbinder (430 oder 440) mit einem der Verbinder (430 oder 440) des linearen Sensors und/oder mit dem mindestens einen Ausgang des mindestens einen Zubehörteils verbunden ist,
- Kommunizieren über die zwei Kommunikationsleiter mindestens einer Antwort auf die mindestens eine lokale Anfrage (RRL) des linearen Sensors, der durch den linearen Sensor (5001 bis 5004) und/oder das Zubehörteil identifiziert wird.

8. Verfahren nach Anspruch 2 und nach einem der Ansprüche 3 bis 7, **dadurch gekennzeichnet, dass** jeder lineare Sensor (5001 bis 5004) und/oder jedes Zubehörteil **gekennzeichnet ist durch** eine eindeutige Kennung.

9. Verfahren nach Anspruch 8, **dadurch gekennzeichnet, dass** die mindestens eine Antwort auf die mindestens eine allgemeine Anfrage, die durch den linearen Sensor gesendet wird, die eindeutige Kennung des mindestens einen linearen Sensors, der durch den linearen Sensor identifiziert wird, sowie die eindeutige Kennung des linearen Sensors (5001 bis 5004) umfasst, und/oder die Antwort auf die mindestens eine allgemeine Anfrage, die durch das Zubehörteil gesendet wird, die eindeutige Kennung des mindestens einen linearen Sensors, der durch das Zubehörteil identifiziert wird, sowie die eindeutige Kennung des Zubehörteils umfasst.

10. Verfahren nach Anspruch 7 und nach einem der Ansprüche 8 bis 9, **dadurch gekennzeichnet, dass** die mindestens eine Antwort auf die lokale Anforderung (RRL) aus der eindeutigen Kennung des mindestens einen linearen Sensors besteht, der durch den linearen Sensor (5001 bis 5004) und/oder das Zubehörteil identifiziert wird.

11. Verfahren nach Anspruch 7 und mindestens einem der Ansprüche 8 bis 10, **dadurch gekennzeichnet, dass** die mindestens eine Antwort auf die lokale Anfrage (RRL) und die mindestens eine Antwort auf die allgemeine Anfrage (RRG) ferner spezifische Daten für jeden linearen Sensor (5001 bis 5004) und/oder jedes Zubehörteil umfassen.

12. Verfahren nach einem der vorstehenden Ansprüche, **dadurch gekennzeichnet, dass** die Kommunikation auf den Kommunikationsleitern in beide Richtungen erfolgt.

13. System zum Implementieren des Verfahrens nach den vorstehenden Ansprüchen 2 bis 12, das System umfassend eine Zentraleinheit (8) und eine Vielzahl von linearen Sensoren (5001 bis 5004), umfassend jeweils ein erstes Ende (430) und ein zweites Ende (440) und die zum Ausbilden einer Erfassungsleitung miteinander verbunden sind, die durch mindestens ein Ende der Erfassungsleitung mit der Zentraleinheit (8) verbunden ist, das System ferner umfassend mindestens ein Zubehörteil.

14. Computerprogrammprodukt, umfassend Anweisungen, die, wenn das Programm durch einen Computer ausgeführt wird, diesen veranlassen, die Schritte des Verfahrens nach einem der Ansprüche 1 bis 12 zu implementieren.

## Claims

1. Method for coding communication conductors of a linear sensor belonging to a system, the system comprising a central unit (8) and a plurality of linear sensors (500) each comprising a first end and a second end and which are connected to one another in series to form a differential bus, which is functionally connected to said central unit by at least one end of said differential bus, each linear sensor comprising at least:
- a first connector (430) at a first end of said linear sensor, the first connector (430) comprising a management module (210) connected to a communication module (410),
- a second connector (440) at a second end of said linear sensor;
- two communication conductors (416), the two communication conductors being connected to the first connector (430) at a first end of said two communication conductors, and to the second connector (440) at a second end of said two communication conductors;
the method comprising the following steps:
- coding at least two information signals simultaneously as follows:
at least one information signal being coded by the central unit (8) by increasing voltage T on the first communication conductor;
at least one information signal being coded by the central unit (8) by decreasing voltage T on the second communication conductor;
- the central unit reading a voltage by measuring the voltage difference between the two communication conductors; and
the system also comprises at least one accessory allowing a modular system to be created.

2. Method according to claim 1, **characterized in that** the system also comprises at least one accessory corresponding to a branch, the accessory comprising at least one output.

3. Method according to claim 1 or 2, **characterized in that** the system also comprises at least one accessory corresponding to a terminator.

4. Method according to claim 1 or 2 or 3, **characterized in that** the system also comprises at least one accessory corresponding to a neutral cable.

5. Method according to according to any one of the preceding claims, **characterized in that** the information signal is sent by the central unit in the form of information bits.

6. Method according to claims 2 to 5, **characterized in that** the central unit is arranged to send at least one general request to the differential bus and to receive at least one response to said general request from the plurality of linear sensors and the at least one accessory, the method also comprising the following steps:
- communicating the at least one general request (RG) sent by the central unit through the plurality of linear sensors (5001 to 5004) and/or the at least one accessory via the two communication conductors; and
- communicating the at least one response to the general request (RRG) sent by said plurality of linear sensors (5001 to 5004) and/or by the at least one accessory via the two communication conductors.

7. Method according to claim 2 and according to any one of the claims 3 to 6, **characterized in that** each linear sensor and/or accessory is arranged to send at least one local request and to receive at least one response to the at least one local request from each linear sensor and/or accessory, the method further comprising the following steps:
- communicating, via the two communication conductors, the at least one local request (RL) to at least one linear sensor identified by said linear sensor (5001 to 5004) and/or by the at least one accessory, the at least one linear sensor being considered as identified if one of its connectors (430 or 440) is connected to one of the connectors (430 or 440) of said linear sensor and/or to the at least one output of the at least one accessory; and
- communicating, via the two communication conductors, at least one response to at least one local request (RRL) from the linear sensor identified by said linear sensor (5001 to 5004) and/or accessory.

8. Method according to claim 2 and according to any one of the claims 3 to 7, **characterized in that** each linear sensor (5001 to 5004) and/or accessory is **characterized by** a unique identifier.

9. Method according to claim 8, **characterized in that** the at least one response to the at least one general request sent by the linear sensor comprises the unique identifier of the at least one linear sensor identified by said linear sensor as well as the unique identifier of said linear sensor (5001 to 5004), and/or the at least one response to the at least one general request sent by the accessory comprises the unique identifier of the at least one linear sensor identified by said accessory as well as the unique identifier of said accessory.

10. Method according to claim 7 and according to any one of the claims 8 to 9, **characterized in that** the at least one response to the local request (RRL) is composed of the unique identifier of the at least one linear sensor identified by said linear sensor (5001 to 5004) and/or the accessory.

11. Method according to claim 7 and according to any one of the claims 8 to 10, **characterized in that** the at least one response to the local request (RRL) and the at least one response to the general request (RRG) also comprise data specific to each linear sensor (5001 to 5004) and/or accessory.

12. Method according to any one of the preceding claims, **characterized in that** communication on the communication conductors is two-way.

13. System for implementing the method according to any one of the preceding claims 2 to 12, the system comprising a central unit (8) and a plurality of linear sensors (5001 to 5004) each comprising a first end (430) and a second end (440) and which are connected to one another to form a sensing line, which is connected to said central unit (8) by at least one end of said sensing line, the system also comprising at least one accessory.

14. Computer program product comprising instructions which, when the program is executed by a computer, cause the latter to implement the steps of the method according to any one of the claims 1 to 12.
